# EUROPEAN PATENT SPECIFICATION

(11) **EP 3 772 146 B1**
(45) Date of publication and mention of the grant of the patent: **21.10.2026**
(21) Application number: 20187624.0
(22) Date of filing: 24.07.2020
(51) Int. Cl.: H02G 3/04, H02G 3/06

(54) **ASSEMBLY FOR FORMING A CABLE TRAY**
VORRICHTUNG ZUR HERSTELLUNG EINER KABELRINNE
ENSEMBLE PERMETTANT DE FORMER UN CHEMIN DE CÂBLES

(30) Priority: 31.07.2019 ES 201931319 U
(43) Date of publication of application: 03.02.2021
(73) Proprietor: Unex Aparellaje Electrico S.L., 08005 Barcelona (ES)
(72) Inventor: SALCEDO SUÑOL, Eloi, 08903 L'Hospitalet de Llobregat (ES)
(74) Representative: Curell Suñol S.L.P.

(56) References cited:
- EP-A1- 0 932 232
- EP-A1- 0 933 851
- WO-A2-2008/153333
- DE-U1- 20 004 923
- FR-A1- 2 290 063

## Description

### Field of the Invention

The invention is comprised in the field of cable trays which are normally used for guiding electric cables or cables of another type along a wall.

The invention relates to an assembly for forming a cable tray of the type according to the preamble of claim 1.

### State of the Art

Assemblies for forming cable trays referred to in the invention are made up of a succession of several cable tray stretches which are arranged one after another with their ends juxtaposed to perform a change in angle, particularly when the tray must go around the corner of a wall, or for extending the cable tray in a straight line. A discontinuity of the cover profile, which constitutes a weak point for the protection of the cables housed in the cable tray, occurs in each attachment area of two juxtaposed ends. A joint cover which is removably coupled to two juxtaposed end segments of the two tray stretches, covering the base profile and the cover profile in these two end segments, is known to be used to eliminate this problem. The user cuts the cable tray stretches to size so as to be able to arrange them with their ends juxtaposed and thereby form the cable tray along a desired path on a wall. Generally, the user first cuts the base profiles, fixes them to the wall with their ends juxtaposed, and then cuts the cover profiles to the suitable measurement with respect to the assembly of base profiles fixed to the wall. The cover profiles must be cut with a length shorter than the base profiles for two reasons: firstly, to leave at the end of the base profile an exposed area having a length sufficient for the joint cover to be directly fixed to the base profile in said exposed area; and secondly, to prevent interferences between two cover profiles in the area in which the two base profiles are juxtaposed. If the cover profile cut by the user is too long, the exposed area of the base profile is too short, so it is not possible to directly fix the joint cover to the base profile. If, in contrast, the cover profile cut by the user is too short, the exposed area of the base profile is too long, so it cannot be completely covered by the joint cover. Therefore, one difficulty faced by the user consists of how to cut the cover profiles to the suitable length to ensure at the same time that the joint cover can be fixed to the base profile and that said joint cover completely covers the area of the base profile which the cover profile left exposed.

Document ES2147115A1 discloses an assembly for forming cable trays which assures a perfect covering of the cables housed in the base profiles, in the area of attachment between two cable tray stretches. To that end, the system comprises an additional connecting part which the user must place between the two juxtaposed ends of the base profiles before placing the cover profiles and the joint cover. Although this system offers a completely satisfactory result, it has the drawback that some users may find the assembly method hard to understand. Furthermore, the additional connecting part increases the number of parts of the assembly, which increases the manufacturing cost and complicates the handling of the assembly in terms of storage, transport, and the final use thereof.

EP0932232A1, EP0933851A1 and WO2008153333A2 disclose different assemblies according to the preamble of claim 1. DE20004923U1 and FR2290063A1 are examples of cable trays with length markings on the external surfaces of the base profiles.

### Description of the Invention

The objective of the invention is to provide an assembly for forming a cable tray of the type indicated above, which allows the user to assemble successive cable tray stretches with the certainty that the joint covers can be fixed to the base profiles and that the cables will not be exposed in the attachment areas, with assembly, however, being easier to use and having as few parts as possible.

This objective is achieved by means of an assembly for forming a cable tray according to claim 1.

As will be seen below in the description of the embodiments of the invention, the surface markings in the base profiles serve as a guide so that the user can easily cut the cover profiles to the suitable length to ensure that, on one hand, the joint cover can be fixed to the base profiles, and on the other, said joint cover covers the entire area of the base profile which the cut cover profile left exposed. To that end, the user can place the cover profile next to the base profile and cut the cover profile such that it leaves a specific maximum number of surface markings in the base profile exposed. This maximum number of exposed surface markings can be indicated in assembly instructions and is predetermined depending on the desired overlapping between the joint cover and the cover profile. An additional advantage of the surface markings is that they also serve as a reference for placing the cover profile in the suitable position with respect to the base profile. In fact, after having cut the cover profile, the user can couple it to the base profile in a position such that said cover profile leaves a specific maximum number of surface markings exposed at each end of the base profile. Another advantage of the surface markings consists of said markings also serving as a reference for cutting the base profiles to size.

Preferably, in order to allow a precise adjustment, the separation distance between each two consecutive surface markings is less than or equal to 20 mm. More preferably, it is less than or equal to 10 mm.

Preferably, in order to obtain a suitable overlapping between the joint cover and the cover profile depending on the height of the base profile, and to thereby assure a suitable protection of the cables, the separation distance between each two consecutive surface markings is less than or equal to the height, more preferably less than or equal to half the height, of the tray stretch when the cover profile is coupled to the base profile.

Preferably, the surface markings are arranged on at least one of the side walls of the base profile. Therefore, when the user places the cover profile next to the base profile parallel thereto, the surface markings constitute a guide for cutting the cover profile arranged right next to the base profile

Preferably, the surface markings are arranged on the two side walls of the base profile, such that each pair of surface markings, formed by a surface marking of one of said side walls and a surface marking of the other one of said side walls, is in one and the same plane orthogonal to the longitudinal direction of the base profile. As a result of this arrangement of the surface markings, the user can readily draw a line through a pair of surface markings and thereby make a straight cut on the cover profile at a point corresponding to said pair of surface markings.

Preferably the, surface markings are arranged in an upper portion of the side wall which is covered by the cover profile. The surface markings therefore do not modify the external appearance of the cable tray, and furthermore can be easily located by the user when the cover profile is not assembled on the base profile. More preferably, the surface markings are arranged on an upper face of the side wall. In this position, the surface markings can even be more easily located by the user, and furthermore offer perfect guiding for placing a ruler or batten perpendicular to the base profile for the purpose of drawing a cutting line on the cover profile placed next to the base profile.

Preferably, the surface markings are lines orthogonal to the longitudinal direction of the base profile to facilitate drawing a cutting line on the cover profile placed next to the base profile.

Preferably, the surface markings are a laser marking made on the surface of the base profile. This way of making the surface markings has the advantage of keeping the mechanical properties of the base profile intact, and furthermore it can be implemented using the laser marking means that are already in use for putting indications on the base profile, such as, for example, the model thereof, an indication of a standardization requirement, an indication of a recycling requirement, etc.

The joint cover can be a bent part which forms an elbow in one and the same plane and is removably coupled to two juxtaposed end segments of two of the tray stretches arranged forming an angle in one and the same plane.

The joint cover can also be a bent part which forms an elbow in two intersecting planes and is removably coupled to two juxtaposed end segments of two of the tray stretches arranged forming an angle in two intersecting planes.

The joint cover can also be a straight part which is removably coupled to two juxtaposed end segments of two of said tray stretches arranged aligned with one another.

The joint cover can also have other shapes. For example, it can have a T shape and be formed for being coupled to juxtaposed end segments of three cable tray stretches arranged forming a T-joint.

The invention also comprises other detail features shown in the detailed description of an embodiment of the invention and in the attached figures.

### Brief Description of the Drawings

The advantages and features of the invention are apparent from the following description in which preferred embodiments of the invention are described in a non-limiting manner with respect to the scope of the main claim in reference to the figures
Figure 1 is a perspective view of a possible embodiment of a cable tray assembly according to the invention.
Figure 2 is a perspective view of one of the cable trays of the assembly, with the cover profile separated from the base profile.
Figure 3 is an enlarged view of an end of the cable tray of Figure 2.
Figure 4 is an enlarged view of an end of the cable tray like that of Figure 3, with the cover profile coupled to the base profile.
Figure 5 is an enlarged top view of the base profile of the cable tray.
Figure 6 is a perspective view of two cable tray stretches forming a flat corner of the assembly, with the ends of the base profiles juxtaposed and each cover profile arranged next to the corresponding base profile, before cutting the cover profiles.
Figure 7 is a view corresponding to Figure 6, after having cut the cover profiles.
Figure 8 is a view corresponding to Figure 7, with the cover profiles cut and coupled to the base profiles, and with the joint cover depicted above the corner.
Figure 9 is a view corresponding to Figure 8, with the joint cover coupled to the two juxtaposed end segments of the two tray stretches.
Figure 10 is a top view of the corner of Figure 9, in which the part of each base profile covered by the joint cover has been depicted by means of hatching lines.
Figures 11, 12, and 13 are views similar to Figures 8, 9, and 10, respectively, showing two cable tray stretches forming a first angled corner of the assembly.
Figures 14, 15, and 16 are views similar to Figures 8, 9, and 10, respectively, showing two cable tray stretches forming a second angled corner of the assembly.
Figures 17, 18, and 19 are views similar to Figures 8, 9, and 10, respectively, showing two cable tray stretches forming a straight extension of the assembly.

### Detailed Description of an Embodiment of the Invention

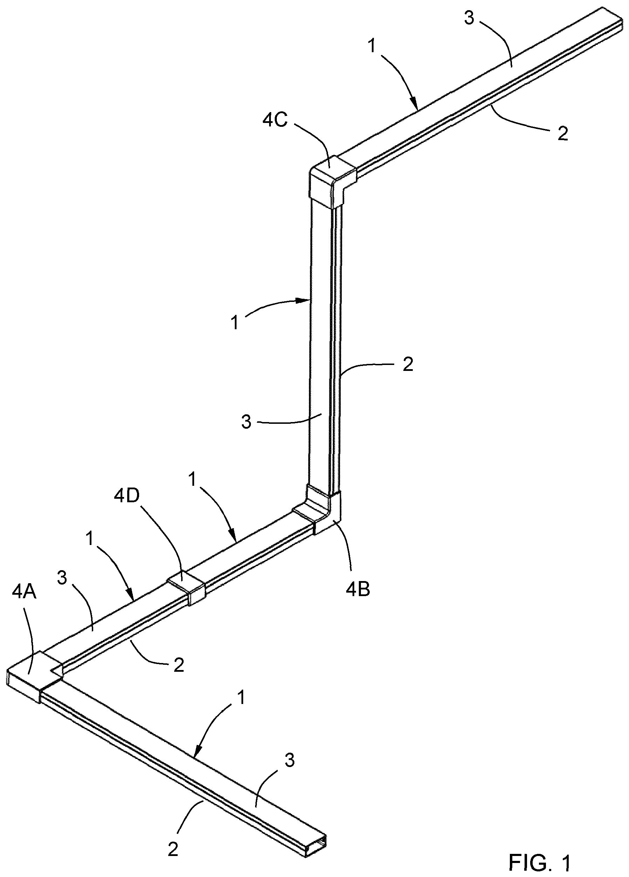

Figure 1 shows by way of example a possible embodiment of a cable tray assembly according to the invention. In this example, the assembly comprises five cable tray stretches 1 and four different joint covers 4A, 4B, 4C, and 4D. The assembly forms:
- a flat corner, formed by two juxtaposed end segments of two tray stretches 1 arranged forming a right angle in one and the same plane, and covered by a bent joint cover 4A which forms an elbow in one and the same plane and is removably coupled to said two segments;
- a first 90° angled corner, formed by two juxtaposed end segments of two tray stretches 1 arranged forming an angle of 90° in two intersecting planes, and covered by a bent joint cover 4B which forms an elbow in two planes intersecting at 90° and is removably coupled to said two segments;
- a second 270° angled corner, formed by two juxtaposed end segments of two tray stretches 1 arranged forming an angle of 270° in two intersecting planes, and covered by a bent joint cover 4C which forms an elbow in two planes intersecting at 270° and is removably coupled to said two segments;
- and a straight attachment, formed by two juxtaposed end segments of two tray stretches 1 arranged aligned with one another and covered by a straight joint cover 4D which is removably coupled to said segments.

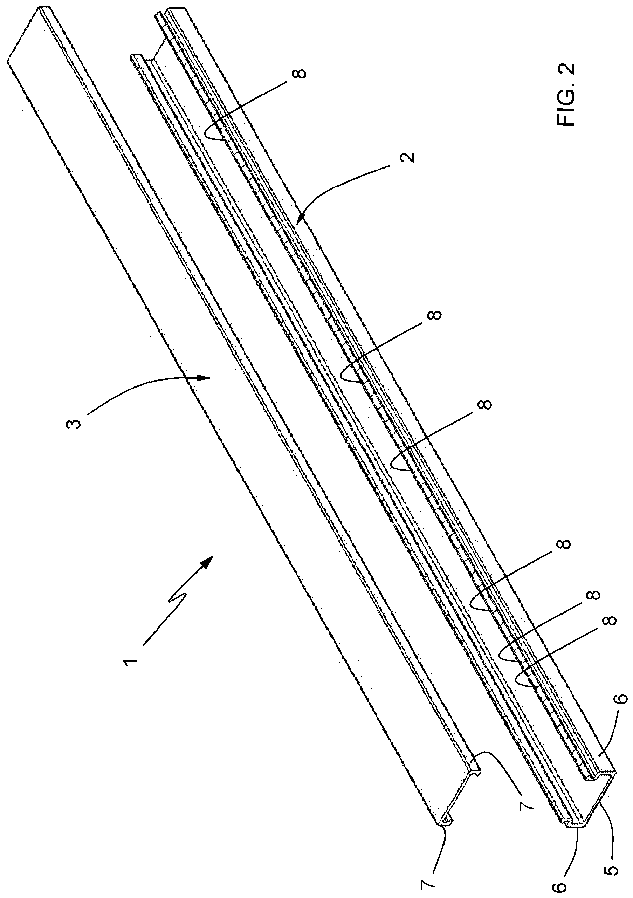

As shown in Figures 2 to 4, each cable tray stretch 1 is formed by:
- a base profile 2 for housing cables, having a U-shaped cross-section with a bottom wall 5 and two opposite side walls 6 demarcating between them an open face of the base profile 2; and
- a cover profile 3 which is removably coupled to the side walls 6 of the base profile 2 for closing the open face of the base profile 2.

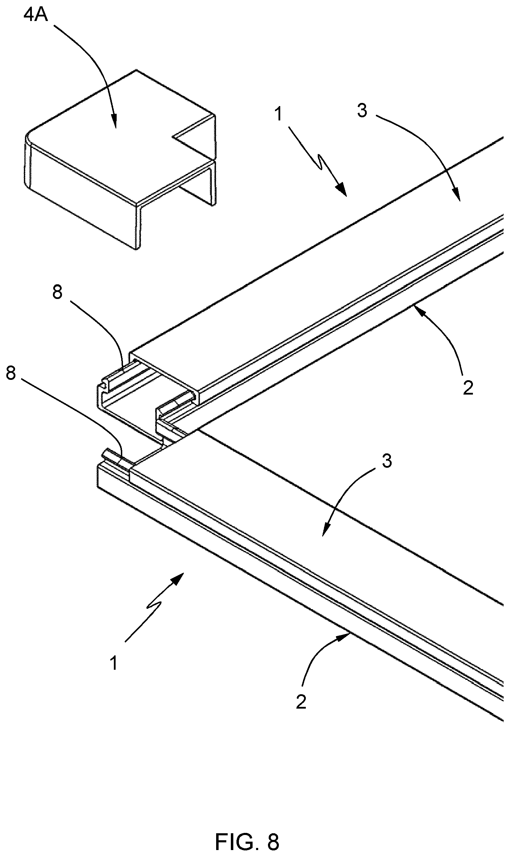

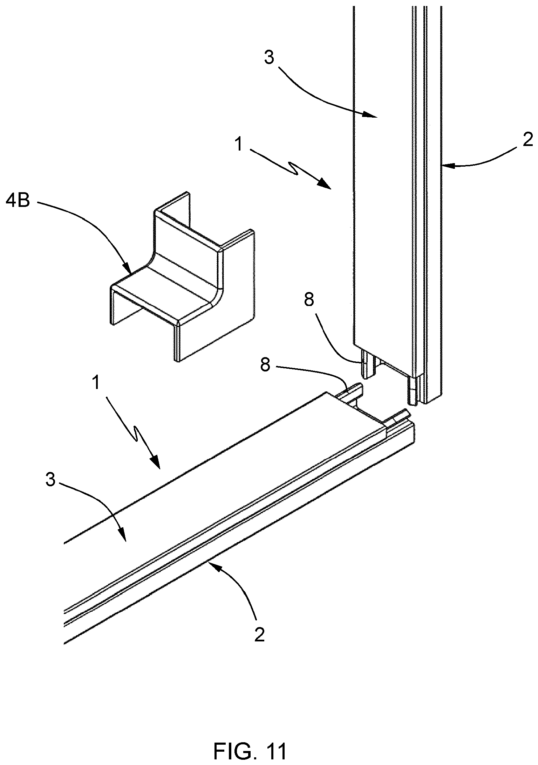

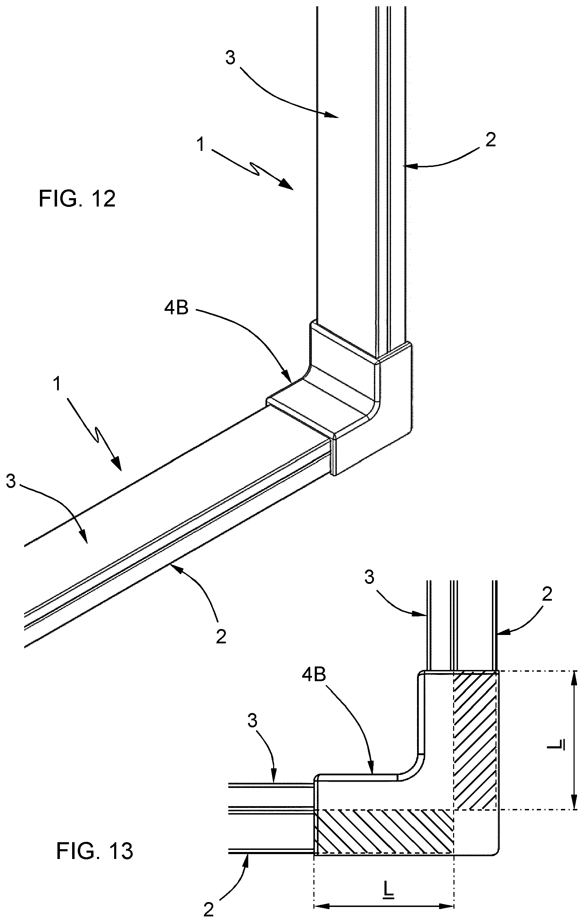

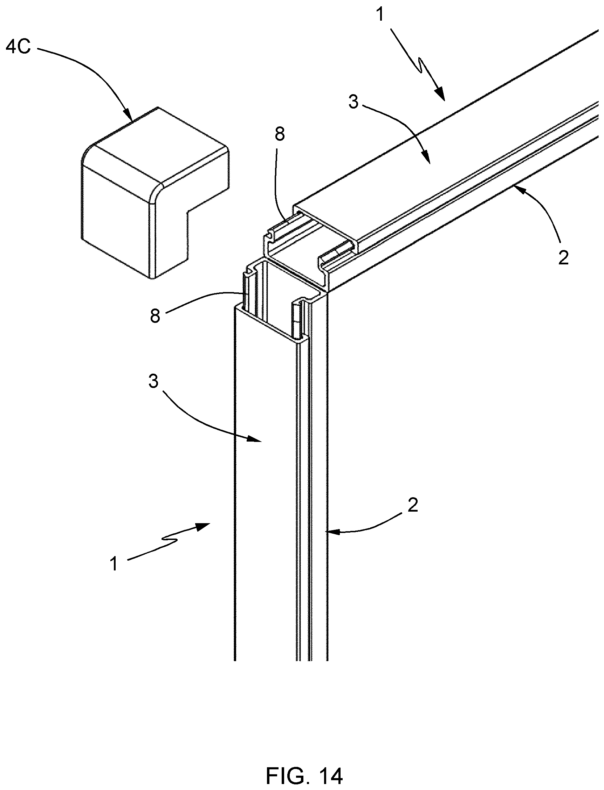

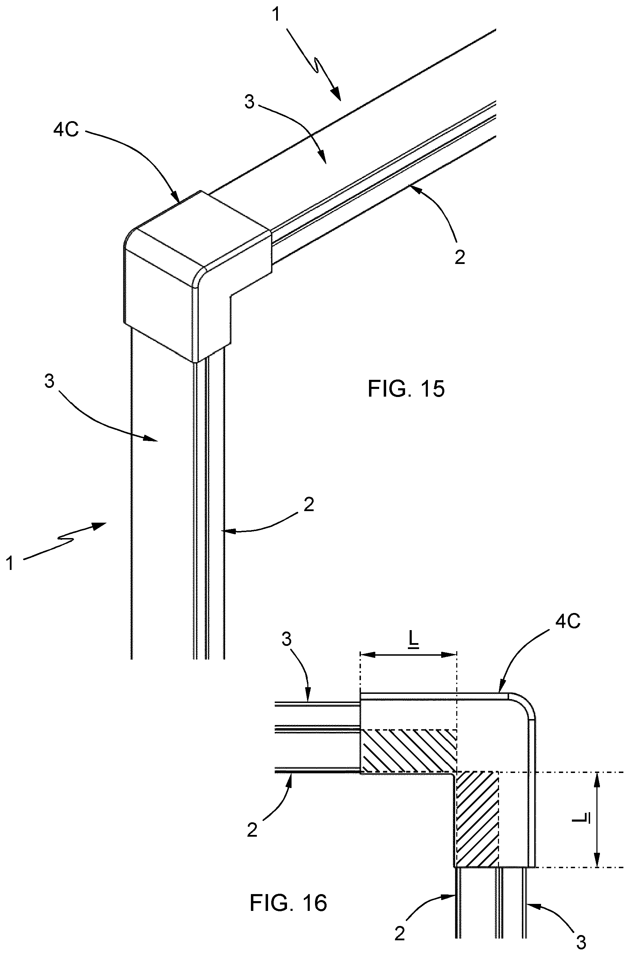

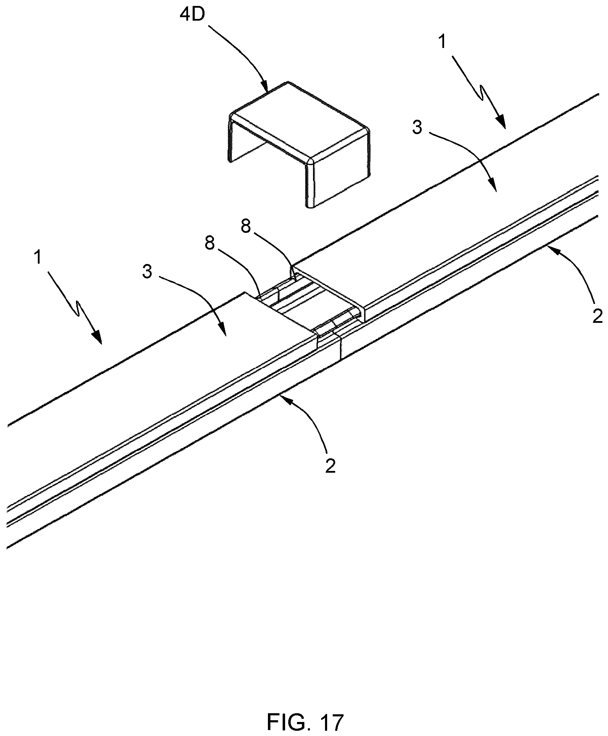

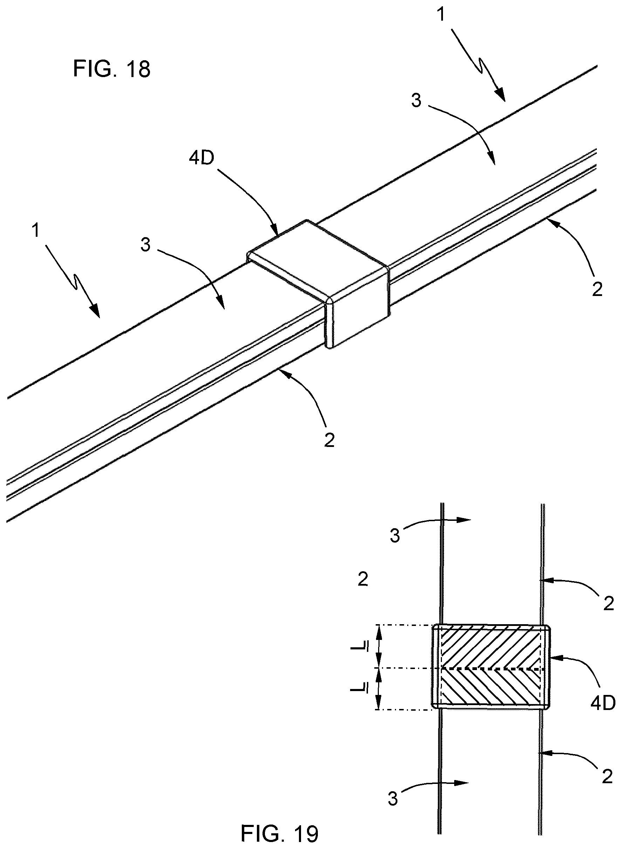

Each of the four joint covers 4A, 4B, 4C, and 4D is formed such that it is removably coupled to two juxtaposed end segments of two of tray stretches 1, and such that it covers the base profile and the cover profile 3 in the two end segments. More specifically, each joint cover is removably snap-fitted to the base profile 2 in each end segment. The purpose of these joint covers 4A, 4B, 4C, and 4D is to cover the discontinuity of the cover profiles 3 in the corners and in the straight attachment, as can be seen in Figures 8-9, 11-12, 14-15, and 17-18 for each of said joint covers 4A, 4B, 4C, and 4D, respectively.

The base profiles 2, the cover profiles 3, and the joint covers 4A, 4B, 4C, and 4D are each a single part made of polymer material, for example a thermoplastic, such as PVC, polyamide, or polypropylene.

To install the assembly of tray stretches 1 on a wall, the user first cuts the base profiles 2 to size and fixes them to the wall, arranging them with their end segments juxtaposed two-by-two for forming a corner or a straight attachment. The user then cuts the cover profiles 3 such that each of them has a length that is a little shorter than the length of the corresponding base profile 2 fixed on the wall. After having laid the cables in the base profiles 2, the user couples each cover profile 3 to the corresponding base profile 2, and finally couples each of the joint covers 4A, 4B, 4C, and 4D in the corresponding corner or straight attachment, fixing each joint cover 4A, 4B, 4C, and 4D by pressure to the base profiles 2 in the area which the cover profile 3 left exposed. To perform this installation, the user faces the following difficulty: if the cover profile 3 which has been cut is too short, the joint cover 4A, 4B, 4C, or 4D cannot cover the entire surface of the base profile 2 which the cover profile 3 left exposed; if, in contrast, the cover profile 3 is too long, the joint cover 4A, 4B, 4C, or 4D cannot be snap-fitted to the base profiles 2 in the area which said cover profile 3 left exposed.

To overcome this difficulty, each of the base profiles 2 comprises surface markings 8 distributed at regular intervals in the longitudinal direction of said base profile 2 and along the entire length thereof. These surface markings 8 can be seen in particular in Figures 2, 3, and 5. The separation distance D between each two consecutive surface markings 8 is such that, when a joint cover 4A, 4B, 4C, or 4D is coupled to the two juxtaposed end segments of the two tray stretches 1, in each of said two end segments the joint cover 4A, 4B, 4C, or 4D covers a length L of the base profile 2, in the longitudinal direction of said base profile 2, greater than said separation distance D. Preferably, said separation distance D is less than or equal to the height H of the tray stretch 1 when the cover profile 3 is coupled to the base profile 2. More preferably, said distance D is less than or equal to half of said height H.

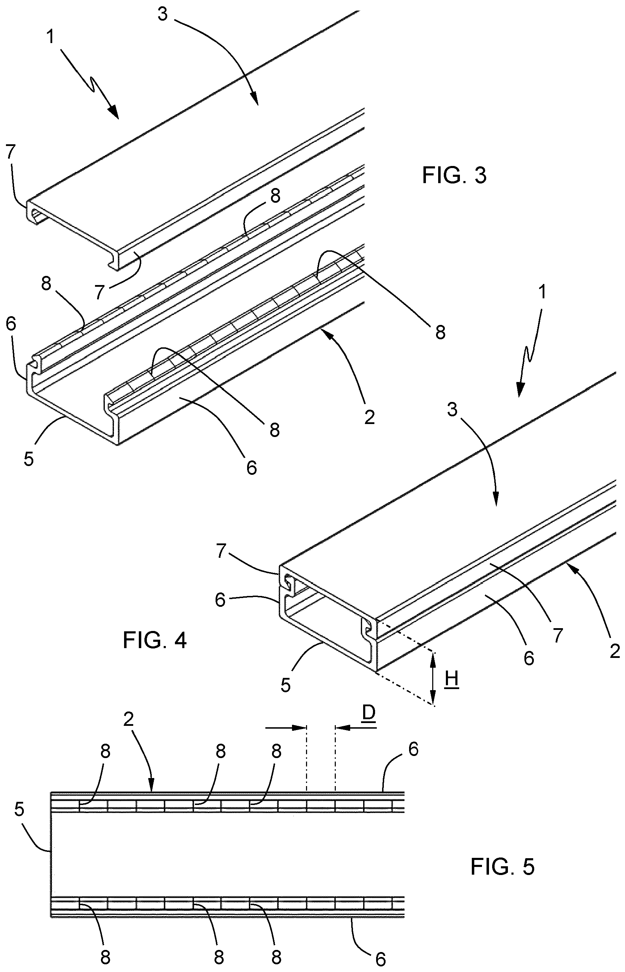

The height H of the base profile 2 and the separation distance D between consecutive surface markings 8 are indicated in Figures 4 and 5, respectively. In the depicted embodiment, the height of the tray stretch 1, when the cover profile 3 is coupled to the base profile 2, is 20 mm and the separation distance D between each two consecutive surface markings 8 is 9 mm.

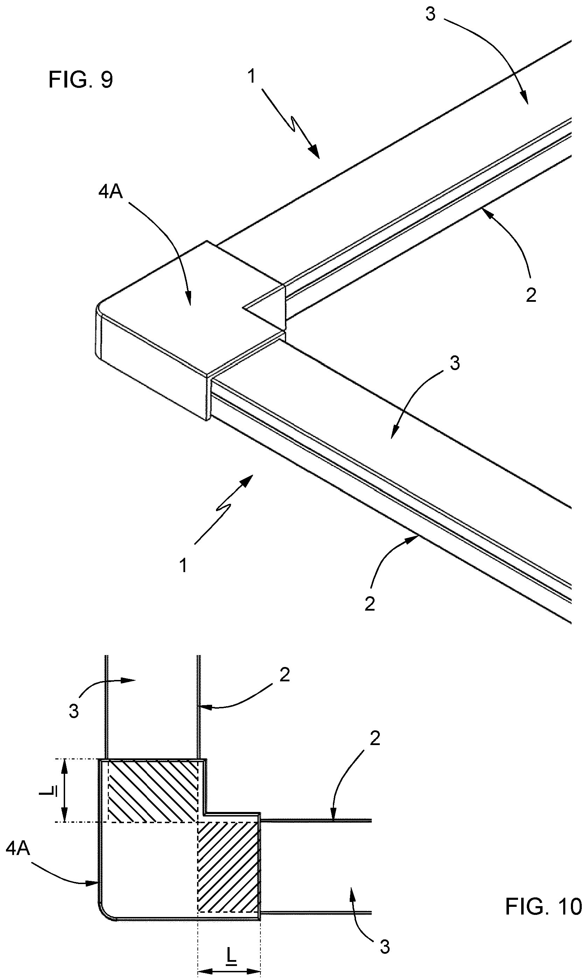

The length L of the base profile 2 which is covered by each of the joint covers 4A, 4B, 4C, and 4D is indicated in Figures 10, 13, 16, and 19, respectively. In the depicted embodiment, this length L is:
22 mm for joint cover 4A,
40 mm for joint cover 4B,
26 mm for joint cover 4C,
17 mm for joint cover 4D.

Preferably, as can be seen in Figures 2 to 5, the surface markings 8 are arranged on the upper face of each of the two side walls 6 of the base profile 2, and consist of lines orthogonal to the longitudinal direction of the base profile 2. These surface markings 8 on the two side walls 6 are aligned in pairs, such that each pair of surface markings 8 is in one and the same plane orthogonal to said longitudinal direction of the base profile 2. Preferably, these surface markings 8 consist of a laser marking made on the surface of the upper face of each side wall 6. This laser marking is advantageously made with the same device used for making other laser markings in the base profile 2, for example, for indicating the model of the cable tray or the type of material making up same.

As can be seen in Figure 4, the upper face of each side wall 6 on which the surface markings 8 are arranged is covered by the cover profile 3 coupled to the base profile 2, such that the surface markings 8 are not visible in the stretches of base profile 2 covered by a cover profile 3 coupled thereto.

To cut a cover profile 3 to the suitable length with the help of the surface markings 8 of the corresponding base profile 2, the user proceeds in the following manner.

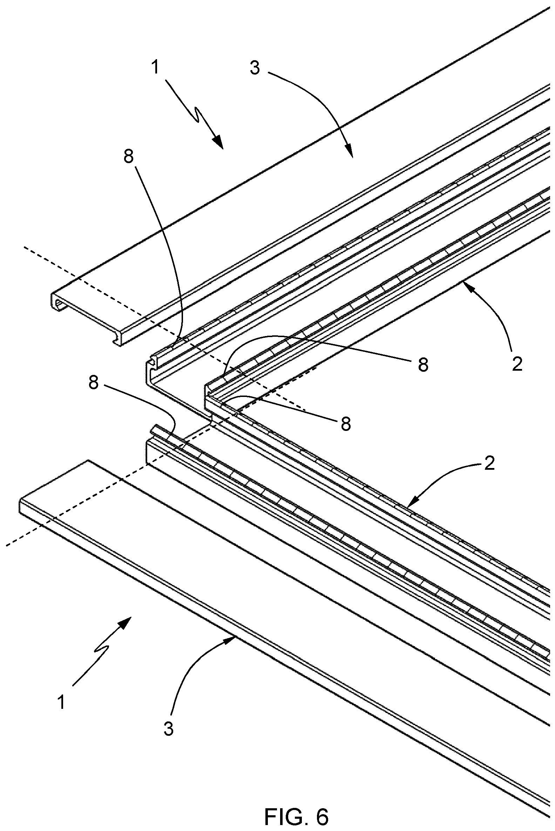

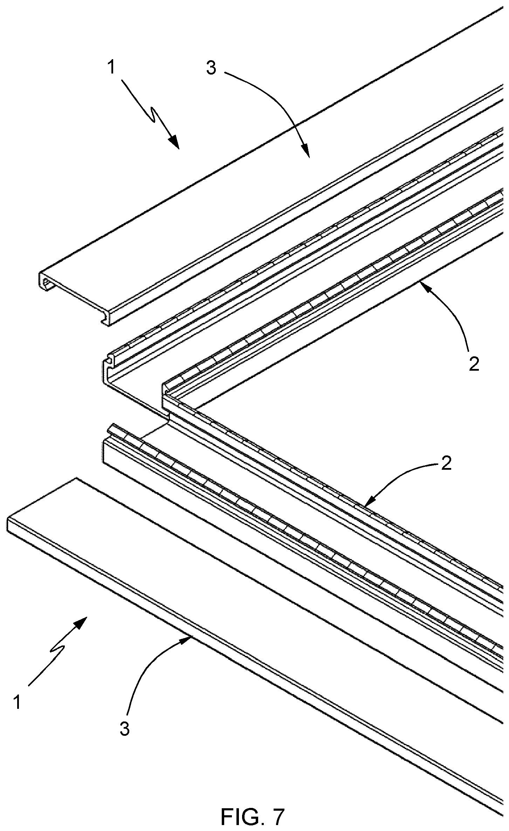

Firstly, the user places the cover profile 3 next to the base profile 2 and parallel thereto, as shown in Figure 6, and draws a line (discontinuous line in the figure) perpendicular to the longitudinal direction of the base profile 2, such that between said line and the end of the base profile 2, the number of surface markings 8 in a side wall 6 of the base profile 2 is a predetermined number, which depends on the type of joint cover that will be placed. For example, for joint cover 4A of Figures 8-10, this predetermined number is two surface markings 8. That is, in this example, between the line drawn by the user and the end of the base profile 2, there must be two surface markings in one of the side walls 6. The user cuts the cover profile 3 along the line he or she has drawn. Figure 7 is a view similar to Figure 6, after having made this cut. The user performs equivalent operations for cutting the other end of the cover profile 3, when the other end of the tray stretch 1 is juxtaposed with the end of another tray stretch 1 and must receive another joint cover. The user then couples each cover profile 3 to the corresponding base profile 2, such that the number of surface markings 8 visible on the side wall 6 of the base profile 2 is the same as the predetermined number (two in this example). Finally, the user couples the joint cover 4A to the base profiles 2 in the juxtaposed end segments of the two tray stretches 1, as shown in Figure 9. The joint cover 4A thus coupled completely covers the area of each base profile 2 left exposed as a result of the cut made on the cover profile 3, and furthermore overlaps the cover profile 3 such that it is arranged on top.

To cut the other ends of the cover profiles 3 for the purpose of coupling the other joint covers 4B, 4C, and 4D, the user proceeds in a manner similar to that indicated for joint cover 4A.

## Claims

1. An assembly for forming a cable tray, comprising:
- at least two cable tray stretches (1), each of said tray stretches (1) comprising a base profile (2) for housing cables, having a U-shaped cross-section with a bottom wall (5) and two opposite side walls (6) demarcating between them an open face of said base profile (2), and a cover profile (3) which is removably coupled to said side walls (6) of the base profile (2) for closing said open face of the base profile (2);
- at least one joint cover (4A, 4B, 4C, 4D), formed such that, in a coupled position, it is removably coupled to two juxtaposed end segments of two of said tray stretches (1), and such that said joint cover (4A, 4B, 4C, 4D) covers said base profile (2) and said cover profile (3) in said two end segments; wherein said joint cover (4A, 4B, 4C, 4D) is configured so that, in said coupled position, it is fixed by pressure to said base profile (2) at an area of said base profile (2) which is left exposed by said cover profile (3) when said cover profile (3) is cut at a length shorter that said base profile (2);
said base profile (2), said cover profile (3), and said joint cover (4A, 4B, 4C, 4D) each being a single part made of polymer material;
**characterized in that** each of said base profiles (2) comprises surface markings (8) distributed at regular intervals in the longitudinal direction of said base profile (2) and along the entire length thereof, and **in that** the separation distance (D) between each two of said consecutive surface markings (8) is such that, when said joint cover (4A, 4B, 4C, 4D) is coupled to said two juxtaposed end segments of the two tray stretches (1), in each of said two end segments said joint cover (4A, 4B, 4C, 4D) covers a length (L) of the base profile (2), in the longitudinal direction of said base profile (2), greater than said separation distance (D).

2. The assembly according to claim 1, **characterized in that** said separation distance (D) between each two of said consecutive surface markings (8) is less than or equal to 20 mm.

3. The assembly according to claim 2, **characterized in that** said separation distance (D) between each two of said consecutive surface markings (8) is less than or equal to 10 mm.

4. The assembly according to any one of claims 1 to 3, **characterized in that** said separation distance (D) between each two of said consecutive surface markings (8) is less than or equal to the height (H) of the tray stretch (1) when said cover profile (3) is coupled to said base profile (2).

5. The assembly according to claim 4, **characterized in that** said separation distance (D) between each two of said consecutive surface markings (8) is less than or equal to half the height (H) of the tray stretch (1) when said cover profile (3) is coupled to said base profile (2).

6. The assembly according to any one of claims 1 to 5, **characterized in that** said surface markings (8) are arranged on at least one of the side walls (6) of said base profile (2).

7. The assembly according to claim 6, **characterized in that** said surface markings (8) are arranged in the two side walls (6) of said base profile (2), such that each pair of surface markings (8), formed by a surface marking (8) of one of said side walls (6) and a surface marking (8) of the other one of said side walls (6), is in one and the same plane orthogonal to the longitudinal direction of said base profile (2).

8. The assembly according to any one of claims 6 or 7, **characterized in that** said surface markings (8) are arranged in an upper portion of said side wall (6) which is covered by said cover profile (3).

9. The assembly according to claim 8, **characterized in that** said surface markings (8) are arranged on an upper face of said side wall (6).

10. The assembly according to any one of claims 1 to 9, **characterized in that** said surface markings (8) are lines orthogonal to the longitudinal direction of said base profile (2).

11. The assembly according to any one of claims 1 to 10, **characterized in that** said surface markings (8) are a laser marking made on the surface of said base profile (2).

12. The assembly according to any one of claims 1 to 11, **characterized in that** said joint cover (4A) is a bent part which forms an elbow in one and the same plane and is removably coupled to two juxtaposed end segments of two of said tray stretches (1) arranged forming an angle in one and the same plane.

13. The assembly according to any one of claims 1 to 11, **characterized in that** said joint cover (4B, 4C) is a bent part which forms an elbow in two intersecting planes and is removably coupled to two juxtaposed end segments of two of said tray stretches (1) arranged forming an angle in two intersecting planes.

14. The assembly according to any one of claims 1 to 11, **characterized in that** said joint cover (4D) is a straight part which is removably coupled to two juxtaposed end segments of two of said tray stretches (1) arranged aligned with one another.

## Patentansprüche

1. Baugruppe zur Bildung eines Kabelkanals, umfassend:
- mindestens zwei Kabelkanalabschnitte (1), wobei jeder der Kabelkanalabschnitte (1) ein Basisprofil (2) zur Aufnahme von Kabeln umfasst, das einen U-förmigen Querschnitt mit einer Bodenwand (5) und zwei gegenüberliegenden Seitenwänden (6) aufweist, die zwischen sich eine offene Seite des Basisprofils (2) begrenzen, sowie ein Abdeckprofil (3), das lösbar mit den Seitenwänden (6) des Basisprofils (2) zum Verschließen der offenen Seite des Basisprofils (2) gekoppelt ist;
- mindestens eine Fugenabdeckleiste (4A, 4B, 4C, 4D), die so ausgebildet ist, dass sie in einer gekoppelten Stellung lösbar mit zwei aneinandergrenzenden Endabschnitten von zwei der Kabelkanalabschnitte (1) gekoppelt ist, und dass die Fugenabdeckleiste (4A, 4B, 4C, 4D) das Basisprofil (2) und das Abdeckprofil (3) in den zwei Endabschnitten abdeckt; wobei die Fugenabdeckleiste (4A, 4B, 4C, 4D) so ausgestaltet ist, dass sie in der gekoppelten Stellung durch Druck an einem Bereich des Basisprofils (2) befestigt ist, der von dem Abdeckprofil (3) freigelassen wird, wenn das Abdeckprofil (3) mit einer kürzeren Länge als das Basisprofil (2) zugeschnitten wird;
wobei das Basisprofil (2), das Abdeckprofil (3) und die Fugenabdeckleiste (4A, 4B, 4C, 4D) jeweils ein einziges Teil aus Polymermaterial sind;
**dadurch gekennzeichnet, dass** jedes der Basisprofile (2) Oberflächenmarkierungen (8) umfasst, die in regelmäßigen Abständen in Längsrichtung des Basisprofils (2) und über dessen gesamte Länge verteilt sind, und dass der Abstand (D) zwischen jeweils zwei der aufeinanderfolgenden Oberflächenmarkierungen (8) derart ist, dass, wenn die Fugenabdeckleiste (4A, 4B, 4C, 4D) mit den zwei aneinandergrenzenden Endabschnitten der zwei Kabelkanalabschnitte (1) gekoppelt ist, die Fugenabdeckleiste (4A, 4B, 4C, 4D) in jedem der zwei Endabschnitte eine Länge (L) des Basisprofils (2) in Längsrichtung des Basisprofils (2) abdeckt, die größer ist als der Abstand (D).

2. Baugruppe nach Anspruch 1, **dadurch gekennzeichnet, dass** der Abstand (D) zwischen jeweils zwei der aufeinanderfolgenden Oberflächenmarkierungen (8) kleiner oder gleich 20 mm ist.

3. Baugruppe nach Anspruch 2, **dadurch gekennzeichnet, dass** der Abstand (D) zwischen jeweils zwei der aufeinanderfolgenden Oberflächenmarkierungen (8) kleiner oder gleich 10 mm ist.

4. Baugruppe nach einem der Ansprüche 1 bis 3, **dadurch gekennzeichnet, dass** der Abstand (D) zwischen jeweils zwei der aufeinanderfolgenden Oberflächenmarkierungen (8) kleiner oder gleich der Höhe (H) des Kabelkanalabschnitts (1) ist, wenn das Abdeckprofil (3) mit dem Basisprofil (2) gekoppelt ist.

5. Baugruppe nach Anspruch 4, **dadurch gekennzeichnet, dass** der Abstand (D) zwischen jeweils zwei der aufeinanderfolgenden Oberflächenmarkierungen (8) kleiner oder gleich der halben Höhe (H) des Kabelkanalabschnitts (1) ist, wenn das Abdeckprofil (3) mit dem Basisprofil (2) gekoppelt ist.

6. Baugruppe nach einem der Ansprüche 1 bis 5, **dadurch gekennzeichnet, dass** die Oberflächenmarkierungen (8) an mindestens einer der Seitenwände (6) des Basisprofils (2) angeordnet sind.

7. Baugruppe nach Anspruch 6, **dadurch gekennzeichnet, dass** die Oberflächenmarkierungen (8) derart an den zwei Seitenwänden (6) des Basisprofils (2) angeordnet sind, dass jedes Paar von Oberflächenmarkierungen (8), das aus einer Oberflächenmarkierung (8) die eine dieser Seitenwände (6) und einer Oberflächenmarkierung (8) die andere dieserer Seitenwände (6) gebildet wird, in ein und derselben Ebene orthogonal zur Längsrichtung des Basisprofils (2) liegt.

8. Baugruppe nach einem der Ansprüche 6 oder 7, **dadurch gekennzeichnet, dass** die Oberflächenmarkierungen (8) in einem oberen Abschnitt der Seitenwand (6) angeordnet sind, der von dem Abdeckprofil (3) abgedeckt wird.

9. Baugruppe nach Anspruch 8, **dadurch gekennzeichnet, dass** die Oberflächenmarkierungen (8) auf einer oberen Fläche der Seitenwand (6) angeordnet sind.

10. Baugruppe nach einem der Ansprüche 1 bis 9, **dadurch gekennzeichnet, dass** die Oberflächenmarkierungen (8) Linien orthogonal zur Längsrichtung des Basisprofils (2) sind.

11. Baugruppe nach einem der Ansprüche 1 bis 10, **dadurch gekennzeichnet, dass** die Oberflächenmarkierungen (8) eine auf der Oberfläche des Basisprofils (2) angebrachte Lasermarkierung sind.

12. Baugruppe nach einem der Ansprüche 1 bis 11, **dadurch gekennzeichnet, dass** die Fugenabdeckleiste (4A) ein gebogenes Teil ist, das einen Knick in ein und derselben Ebene bildet und lösbar mit zwei aneinandergrenzenden Endabschnitten von zwei der Kabelkanalabschnitte (1) gekoppelt ist, die einen Winkel in ein und derselben Ebene bilden.

13. Baugruppe nach einem der Ansprüche 1 bis 11, **dadurch gekennzeichnet, dass** die Fugenabdeckleiste (4B, 4C) ein gebogenes Teil ist, das einen Knick in zwei sich schneidenden Ebenen bildet und lösbar mit zwei aneinandergrenzenden Endabschnitten von zwei der Kabelkanalabschnitte (1) gekoppelt ist, die einen Winkel in zwei sich schneidenden Ebenen bilden.

14. Baugruppe nach einem der Ansprüche 1 bis 11, **dadurch gekennzeichnet, dass** die Fugenabdeckleiste (4D) ein gerades Teil ist, das lösbar mit zwei aneinandergrenzenden Endabschnitten von zwei der Kabelkanalabschnitte (1) gekoppelt ist, die miteinander ausgerichtet angeordnet sind.

## Revendications

1. Ensemble pour former un chemin de câbles, comprenant:
- au moins deux sections (1) de chemin de câbles, chacune desdites sections (1) de chemin comprenant un profilé de base (2) pour contenir des câbles, ayant une coupe transversale en forme de U avec une paroi inférieure (5) et deux parois latérales (6) opposées délimitant entre elles une face ouverte dudit profilé de base (2), et un profilé de couverture (3) qui est accouplé de manière amovible auxdites parois latérales (6) du profilé de base (2) pour fermer ladite face ouverte du profilé de base (2);
- au moins un couvre-joint (4A, 4B, 4C, 4D), formé de sorte que, dans une position accouplée, il soit accouplé de manière amovible à deux segments d'extrémité juxtaposés de deux desdites sections (1) de chemin, et de sorte que ledit couvre-joint (4A, 4B, 4C, 4D) couvre ledit profilé de base (2) et ledit profilé de couverture (3) dans lesdits deux segments d'extrémité; dans lequel ledit couvre-joint (4A, 4B, 4C, 4D) est configuré de sorte que, dans ladite position accouplée, il soit fixé par pression audit profilé de base (2) au niveau d'une zone dudit profilé de base (2) qui est laissée exposée par ledit profilé de couverture (3) lorsque ledit profilé de couverture (3) est coupé à une longueur plus courte que ledit profilé de base (2);
ledit profilé de base (2), ledit profilé de couverture (3) et ledit couvre-joint (4A, 4B, 4C, 4D) étant chacun une seule pièce fabriquée en matière polymère;
**caractérisé en ce que** chacun desdits profilés de base (2) comprend des marquages de surface (8) répartis à intervalles réguliers dans la direction longitudinale dudit profilé de base (2) et sur la longueur entière de celui-ci, et **en ce que** la distance de séparation (D) entre deux desdits marquages de surface (8) consécutifs est telle que, lorsque ledit couvre-joint (4A, 4B, 4C, 4D) est accouplé auxdits deux segments d'extrémité juxtaposés des deux sections (1) de chemin, dans chacun desdits deux segments d'extrémité ledit couvre-joint (4A, 4B, 4C, 4D) couvre une longueur (L) du profilé de base (2), dans la direction longitudinale dudit profilé de base (2), supérieure à ladite distance de séparation (D).

2. Ensemble selon la revendication 1, **caractérisé en ce que** ladite distance de séparation (D) entre deux desdits marquages de surface (8) consécutifs est inférieure ou égale à 20 mm.

3. Ensemble selon la revendication 2, **caractérisé en ce que** ladite distance de séparation (D) entre deux desdits marquages de surface (8) consécutifs est inférieure ou égale à 10 mm.

4. Ensemble selon l'une quelconque des revendications 1 à 3, **caractérisé en ce que** ladite distance de séparation (D) entre deux desdits marquages de surface (8) consécutifs est inférieure ou égale à la hauteur (H) de la section (1) de chemin lorsque ledit profilé de couverture (3) est accouplé audit profilé de base (2).

5. Ensemble selon la revendication 4, **caractérisé en ce que** ladite distance de séparation (D) entre deux desdits marquages de surface (8) consécutifs est inférieure ou égale à la moitié de la hauteur (H) de la section (1) de chemin lorsque ledit profilé de couverture (3) est accouplé audit profilé de base (2).

6. Ensemble selon l'une quelconque des revendications 1 à 5, **caractérisé en ce que** lesdits marquages de surface (8) sont agencés sur au moins une des parois latérales (6) dudit profilé de base (2).

7. Ensemble selon la revendication 6, **caractérisé en ce que** lesdits marquages de surface (8) sont agencés dans les deux parois latérales (6) dudit profilé de base (2), de sorte que chaque paire de marquages de surface (8), formée par un marquage de surface (8) de l'une desdites parois latérales (6) et un marquage de surface (8) de l'autre desdites parois latérales (6), soit dans un seul et même plan orthogonal à la direction longitudinale dudit profilé de base (2).

8. Ensemble selon l'une quelconque des revendications 6 ou 7, **caractérisé en ce que** lesdits marquages de surface (8) sont agencés dans une portion supérieure de ladite paroi latérale (6) qui est couverte par ledit profilé de couverture (3).

9. Ensemble selon la revendication 8, **caractérisé en ce que** lesdits marquages de surface (8) sont agencés sur une face supérieure de ladite paroi latérale (6).

10. Ensemble selon l'une quelconque des revendications 1 à 9, **caractérisé en ce que** lesdits marquages de surface (8) sont des lignes orthogonales à la direction longitudinale dudit profilé de base (2).

11. Ensemble selon l'une quelconque des revendications 1 à 10, **caractérisé en ce que** lesdits marquages de surface (8) sont un marquage laser réalisé sur la surface dudit profilé de base (2).

12. Ensemble selon l'une quelconque des revendications 1 à 11, **caractérisé en ce que** ledit couvre-joint (4A) est une partie courbée qui forme un coude dans un seul et même plan et est accouplée de manière amovible à deux segments d'extrémité juxtaposés de deux desdites sections (1) de chemin agencées formant un angle dans un seul et même plan.

13. Ensemble selon l'une quelconque des revendications 1 à 11, **caractérisé en ce que** ledit couvre-joint (4B, 4C) est une partie courbée qui forme un coude dans deux plans concourants et est accouplée de manière amovible à deux segments d'extrémité juxtaposés de deux desdites sections (1) de chemin agencées formant un angle dans deux plans concourants.

14. Ensemble selon l'une quelconque des revendications 1 à 11, **caractérisé en ce que** ledit couvre-joint (4D) est une partie droite qui est accouplée de manière amovible à deux segments d'extrémité juxtaposés de deux desdites sections (1) de chemin agencées alignées l'une avec l'autre.
